Europäisches Patentamt

European Patent Office

Office européen des brevets

(19)

(11) Veröffentlichungsnummer: **0 200 710 B1**

## (12) EUROPÄISCHE PATENTSCHRIFT

(45) Veröffentlichungstag der Patentschrift: **23.09.92**

(51) Int. Cl.⁵: **C02F 1/48**, C02F 1/50

(21) Anmeldenummer: **86890047.3**

(22) Anmeldetag: **04.03.86**

Die Akte enthält technische Angaben, die nach dem Eingang der Anmeldung eingereicht wurden und die nicht in dieser Patentschrift enthalten sind.

(54) **Verfahren zur Aufbereitung von Trink- und/oder Brauchwasser und Vorrichtung zum Durchführen des Verfahrens.**

(30) Priorität: **29.03.85 AT 945/85**

(43) Veröffentlichungstag der Anmeldung:
**10.12.86 Patentblatt 86/45**

(45) Bekanntmachung des Hinweises auf die Patenterteilung:
**23.09.92 Patentblatt 92/39**

(84) Benannte Vertragsstaaten:
**AT BE CH DE FR GB IT LI LU NL SE**

(56) Entgegenhaltungen:
**AT-B- 124 415**
**CH-A- 400 924**
**GB-A- 675 369**
**US-A- 4 153 559**

(73) Patentinhaber: **FRANZ WALDMANN AKTIENGE-SELLSCHAFT**
**Burggasse 60**
**A-1070 Wien(AT)**

(72) Erfinder: **Mach, Guido, Dipl.-Ing.**
**verstorben**
**(AT)**

(74) Vertreter: **Pawloy, Heinrich, Dr. et al**
**Riemergasse 14**
**A-1010 Wien(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Aufbereiten von Trink- und/oder Brauchwasser, bei dem das Wasser durch ein oder mehrere Magnetfeld(er) hindurchgeleitet wird.

Es sind verschiedene Techniken zum Aufbereiten von Trink-und/oder Brauchwasser bekannt, und es werden diese Techniken dann eingesetzt, wenn man nachteilige Auswirkungen von Wasserinhaltsstoffen, die im Trink- und/oder Brauchwasser vorliegen, vermindern oder beheben will. Durch eine Behandlung des Wassers mit Magnetfeldern, wobei das Wasser durch ein oder mehrere Magnetfeld(er) hindurchgeleitet wird, kann man dem Entstehen von unerwünschten Ablagerungen in Rohren und Behältern aus im Wasser enthaltenen Mineralsalzen entgegenwirken. Die Magnetfeldbehandlung ist aber gegen die nachteiligen Auswirkungen von im Wasser enthaltenen lebenden Mikroorganismen, wie z.B. Bakterien und/oder Algen, nicht oder kaum wirksam.

Eine Vorrichtung zur Magnetfeldbehandlung von Wasser ist z.B. in der GB-A-675 369 beschrieben. Bei dieser bekannten Vorrichtung ist ein durch ein Rohr oder dgl. gebildeter Durchflußkanal vorgesehen, dem entlang mehrere Magnete angeordnet sind, welche mehrere Magnetfelder erzeugen, deren Feldlinien senkrecht zur Fließrichtung des Wassers verlaufen. Es ist dabei die Magnetisierung der Magnete so gewählt, daß die Flüssigkeit nacheinander Magnetfelder durchfließt, die zueinander entgegengesetzte Polarität haben. Hiezu sind z.B. axial magnetisierte Magnete mit ihren gleichnamigen Polen einander zugewandt angeordnet. Es sind auch Ausführungsformen mit einem im Inneren des Durchflußkanals axial verlaufend angeordneten Kern aus magnetisierbarem Material vorgesehen.

Um den als nachteilig empfundenen Auswirkungen des Vorhandenseins von Mikroorganismen in Wasser entgegenzuwirken, setzt man in der Regel dem Wasser chemische Mittel, wie z.B. Halogene oder Halogenverbindungen, zu, wobei aber solche Zusätze selbst meist unerwünschte Nebenwirkungen verursachen. Weiter ist es auch bekannt, Wasser zur Verminderung oder Behebung nachteiliger Wirkungen von Mikroorganismen einer Behandlung mit oligodynamisch wirkenden Metallen zu unterziehen; eine solche Behandlung wirkt nur gegen im Wasser vorhandene Mikroorganismen und hat auf unerwünschte Ablagerungen, welche sich aus im Wasser enthaltenen Mineralsalzen bilden, keinen unmittelbaren Einfluß.

Ein Verfahren zur oligodynamischen Behandlung von Wasser ist in der CH-A-400 924 beschrieben. Bei diesem Verfahren werden zur Keimfreimachung und Keimfreihaltung lose Plättchen aus einer korrosionsfähigen Legierung von Silber und einem anderen oxidierbaren Metall im zu behandelnden Wasser angeordnet. Durch die entstehende Korrosion werden ständig Silberionen und Ionen des zulegierten Metalls freigesetzt und entfalten eine keimtötende Wirkung.

Es ist ein Ziel der vorliegenden Erfindung, ein Verfahren zu schaffen, mit dem auf einfache Weise den unerwünschten Auswirkungen, und zwar insbesondere dem Entstehen störender Ablagerungen, von im Wasser enthaltenen Mineralsalzen und im Wasser enthaltenen Mikroorganismen entgegengewirkt werden kann. Weiter soll durch die Erfindung auch eine für das Durchführen der zu schaffenden Technik geeignete Vorrichtung angegeben werden.

Das erfindungsgemäße Verfahren eingangs erwähnter Art ist dadurch gekennzeichnet, daß das Wasser in Kombination mit der Magnetfeldbehandlung auch einer oligodynamischen Behandlung unterworfen wird und hiefür Stücke oligodynamisch wirkender Metalle ohne äußere Stromzufuhr in der Wasserströmung im Bereich des Magnetfeldes bzw. der Magnetfelder beweglich angeordnet werden. Durch diese Vorgangsweise kann der vorerwähnten Zielsetzung sehr gut entsprochen werden. Die beiden in Kombination vorgesehenen Komponenten der Wasserbehandlung unterstützen einander in vorteilhafter Weise. So wird durch die Magnetfeldbehandlung des Wassers die oligodynamische Wirkung von Metallionen gefördert, sodaß schon geringe Mengen derartiger Metallionen im Wasser eine sehr gute Wirksamkeit entfalten, und es wird umgekehrt durch die oligodynamische Wirkung, welche das Entstehen von Ablagerungen aus organischem Material hindert oder mindert, auch der stets vorhandenen Tendenz, daß Ablagerungen aus organischem Material das Entstehen mineralischer Ablagerungen begünstigen, entgegengearbeitet. Die Möglichkeit, daß man durch die beim erfindungsgemäßen Verfahren vorgesehene Kombination einer Magnetfeldbehandlung mit einer oligodynamischen Behandlung bei der oligodynamischen Behandlung mit dem Einbringen geringer Metallmengen in das Wasser das Auslangen finden kann, ist von besonderer Bedeutung, da so die Beladung des Wassers durch Metallionen niedrig gehalten werden kann, was insbesondere beim Aufbereiten von Trinkwasser von Vorteil ist.

Es wird das Versetzen des zu behandelnden Wassers mit oligodynamisch wirkenden Ionen dadurch begünstigt, daß Stücke oligodynamisch wirkender Metalle ohne äußere Stromzufuhr in der Wasserströmung im Bereich des Magnetfeldes bzw. der Magnetfelder beweglich angeordnet werden, sodaß größere Wassermengen in verhältnismäßig kurzer Zeit behandelt werden können. Es kommt dabei nämlich zum Entstehen veränderlicher elektrischer Wirbelströme in den Metallstücken, und es wird durch diese Ströme die Abgabe von Metallionen gefördert. Eine weitere Förderung ergibt sich, wenn man mindestens zwei verschiedene oligodynamisch wirkende Metalle einsetzt, da solcherart die Ionenabgabe auch durch elektrolytische Wirkung intensiviert wird. Weiter kann durch das Einbringen der Ionen mehrerer oligodynamisch wirkender Metalle in das Wasser eine Verbesserung des Angriffes auf die im Wasser lebenden Mikroorganismen erwarten werden. Das angestrebte Freisetzen von Metallionen aus dem oligodynamisch wirkenden Metall kann weiter dadurch gefördert werden, daß kleine, durch ihre Abmessungen und ihre Form von der Wasserströmung bewegbare Metallstücke, welche lose in der Wasserströmung angeordnet sind, eingesetzt werden. Die gute Wirkung dieser Maßnahme erscheint dadurch erklärlich, daß die intensive Bewegung, welche kleinen Metallstücken durch die Wasserströmung erteilt wird, entsprechend ausgeprägte Wirbelströme in den kleinen Metallstücken erzeugt. Es ist dabei günstig, wenn man kleine Metallplättchen mit etwa 5 - 10 mm Durchmesser einsetzt. Es ist dabei weiter sowohl für die Wirkung der magnetischen Behandlung als auch zum Herbeiführen einer intensiven Bewegung der Metallstücke von Vorteil, wenn man vorsieht, daß das aufzubereitende Wasser in annähernd lotrechter Richtung aufwärts strömend durch ein oder mehrere Magnetfeld(er), welche im Bereich dieses lotrecht verlaufenden Strömungsabschnittes angeordnet sind, geführt wird, und daß dabei die Strömungsgeschwindigkeit des Wassers dahingehend eingestellt wird, daß die in den Magnetfeldbereich eingebrachten oligodynamisch wirkenden Metallstücke an den Stellen, an denen die Magnetfelder vorliegen, unter hin- und hergehender Bewegung annähernd in Schwebe verharren.

Hinsichtlich der oligodynamischen Behandlung ist es günstig, wenn man für die Lieferung der Metallionen Silberkörper allein oder Silberkörper zusammen mit Körpern aus einem anderen oligodynamisch wirkenden Metall einsetzt, wobei das andere Metall vorzugsweise Kupfer ist. Die beim Einsatz mehrerer Metalle bevorzugte Kombination von Silber und Kupfer ist sowohl hinsichtlich des Einbringens der Metallionen in das Wasser, welche durch elektrolytische Effekte unterstützt wird, günstig als auch hinsichtlich der beabsichtigten Wirkung auf die im Wasser befindlichen lebenden Mikroorganismen. Als Silberkörper setzt man vorteilhaft Körper aus schwach legiertem Silber ein, und zwar vorzugsweise Körper aus Silber, welches einen Feingehalt von ca. 900 aufweist.

Um die bei der erfindungsgemäßen Behandlung erzielbare Wirkung voll auszuschöpfen, ist es vorteilhaft, wenn das magnetisch und oligodynamisch behandelte Wasser nach der Behandlung mindestens etwa 15 min, vorzugsweise aber 20 bis 30 min, gespeichert, danach filtriert und dann seiner Verwendung zugeführt wird.

Die erfindungsgemäße Vorrichtung ist dadurch gekennzeichnet, daß die Vorrichtung eine einen Durchflußweg bildende Kammer aufweist, in deren Bereich mindestens ein Magnetsystem angeordnet ist, welches ein quer zum Durchflußweg verlaufendes, den Durchflußweg durchsetzendes Magnetfeld erzeugt, und in der Kammer Körper aus einem oder mehreren oligodynamisch wirkenden Metall(en) lose angeordnet sind und daß an der Zufluß- und an der Abflußöffnung der Kammer Lochbleche, Siebe oder dgl., welche das Passieren des Wassers erlauben, jedoch einen Durchtritt der genannten Körper hindern, angebracht sind. Diese Vorrichtung hat den Vorteil eines sehr einfachen Aufbaues und den weiteren wesentlichen Vorteil, daß sie auch über längere Zeiträume betriebssicher ist und kaum einer Wartung bedarf. Es kann auf einfache Weise durch die lose Anordnung der Metallkörper in der Kammer eine gute Beweglichkeit derselben, die wie vorstehend erwähnt das leichte Lösen der Metallionen fördert, erzielt werden, und gleichzeitig eine Sicherung gegen ein unerwünschtes Austreten der Metallkörper aus der Kammer erhalten werden, welche auch bei stark schwankender Durchströmung der Kammer voll wirksam ist.

Die Bewegung der die oligodynamisch wirkenden Ionen abgebenden Metallkörper in der vom zu behandelnden Wasser durchströmten Kammer soll so erfolgen, daß diese Körper im wesentlichen im Bereich der Magnetfelder, die den Durchflußweg des Wassers durch die Kammer quer durchsetzen, bleiben. Dies wird vorteilhaft durch Wahl bzw. Einstellung der Wassermenge, welche die Kammer durchfließt, bzw. der Strömungsgeschwindigkeit des Wassers in der Kammer bewirkt. Für diese Einstellung und zur Überwachung der Bewegung der Metallkörper in der Kammer wird vorteilhaft ein Teil der Kammerwand als Sichtfenster ausgebildet. Es ist dabei günstig, wenn man ein oder mehrere Sichtfenster im Bereich der die Kammer durchsetzenden Magnetfelder anordnet. Weiter ist es auch vorteilhaft, ein Sichtfenster in dem der Abflußöffnung benachbarten Teil der Kammerwand anzuordnen, weil damit rasch erkannt werden kann, ob die Strömungsgeschwindigkeit so hoch ist, daß die Metallkörper aus dem Magnetfeldbereich hinaus getrieben werden und mit dem Erkennen eines solchen Zustandes diesem auch rasch abgeholfen werden kann.

Man sieht vorzugsweise vor, daß der Durchflußweg durch die Kammer von unten nach oben führt und daß der Durchflußquerschnitt der Kammer in dem zwischen den Magnetfeldern und der Abflußöffnung der Kammer gelegenen Abschnitt größer ist als im darunterliegenden Bereich der Kammer. Es ergibt sich so, daß die aus oligodynamischem Metall bestehenden Körper, die einen Auftrieb durch die Strömung des zu behandelnden Wassers in der Kammer erfahren, dem die Schwerkraft und auch Kräfte entgegenwirken, die von den Magnetfeldern verursacht sind, bei geeignet gewählter Durchflußmenge des zu behandelnden Wassers durch die mit dem größer werdenden Durchflußquerschnitt dort sinkende Durchflußgeschwindigkeit in den vor der Abflußöffnung der Kammer liegenden Abschnitt kaum eindringen bzw. von dort in den die Magnetfelder aufweisenden Bereich der Kammer zurückkehren. Es kann damit die Durchflußgeschwindigkeit in einem gewissen Bereich schwanken, ohne daß dadurch der angestrebte Zustand, daß die aus oligodynamischem Metall bestehenden Körper annähernd schwebend im Bereich der Magnetfelder bleiben, beeinträchtigt wird.

Hinsichtlich der bei der erfindungsgemäßen Vorrichtung vorgesehenen Magnetsysteme ist es günstig, wenn mehrere Magnetsysteme längs des durch die Kammer führenden Durchflußweges nacheinander angeordnet sind und deren Magnetfluß dahingehend orientiert ist, daß die den Durchflußweg durchsetzenden, aufeinanderfolgenden Magnetfelder in verschiedenen, zueinander entgegengesetzten Richtungen orientiert sind. So wird das Wasser beim Durchfließen der Vorrichtung nacheinander mehreren Magnetfeldern ausgesetzt, welche eine voneinander verschiedene Orientierung haben. Dies ist für die magnetische Behandlung, die dem Entstehen kompakter Ablagerungen aus Mineralsalzen entgegenwirken soll, besonders günstig.

Eine hinsichtlich ihrer magnetischen Einwirkung auf das Wasser und hinsichtlich ihres konstruktiven Aufbaues vorteilhafte Ausführungsform der erfindungsgemäßen Vorrichtung ist dadurch gekennzeichnet, daß die Kammer rohrartig ausgebildet ist und daß mindestens ein Magnetsystem mit einem außerhalb der Kammer angeordneten und in Längs- bzw. Axialrichtung der Kammer magnetisierten Dauermagneten und mit einem im Inneren der Kammer angeordneten Kern aus magnetisierbarem Material vorgesehen ist, wobei der Magnetfluß des außerhalb der Kammer angeordneten Dauermagneten von der einen Seite des Magneten ausgehend die Wasserströmung in der Kammer zu dem im Inneren der Kammer angeordneten Kern hin durchquert und dabei in der Kammer ein erstes Magnetfeld bildet, dann im Kern annähernd parallel zur Richtung des Durchflusses des Wassers durch die Kammer verläuft und vom Kern zurück zur anderen Seite des außerhalb der Kammer angeordneten Dauermagneten führt und dabei nochmals die Wasserströmung in der Kammer durchquert und in der Kammer ein zweites Magnetfeld bildet, das entgegengesetzt zum erstgenannten Magnetfeld orientiert ist. Es ist dabei im Sinne einer weiteren Intensivierung der Magnetwirkung auf das Wasser günstig, wenn der in der Kammer angeordnete Kern des jeweiligen Magnetsystems ein axial magnetisierter Dauermagnet ist.

Für die Erzielung möglichst gleichförmiger Magnetfelder in der Kammer, in der die Behandlung des Wassers erfolgt, ist es weiters günstig, wenn der außerhalb der Kammer angeordnete Dauermagnet des jeweiligen Magnetsystems ein die Kammer umgebender Ringmagnet ist. Es ist weiters für die Stabilität des Magnetsystems bzw. der Magnetsysteme vorteilhaft, wenn man den Dauermagneten aus einem Material mit hoher Koerzitivkraft bildet. Es haben z.B. Ferritmagnete eine verhältnismäßig hohe Koerzitivkraft und sind überdies preisgünstig erhältlich. Eine Ausführungsform der erfindungsgemäßen Vorrichtung, welche besonders den Eigenschaften derartiger Magnete Rechnung trägt und auch bei konstruktiv einfachem Aufbau besonders wirksame Magnetfelder zu erzielen gestattet, ist dadurch gekennzeichnet, daß der außerhalb der Kammer angeordnete Dauermagnet durch zwei die Kammer umgebende koaxial angeordnete Ringe, welche axial magnetisiert sind und mit einem zu den Ringen koaxialen Rohr aus magnetisierbarem Material miteinander verbunden sind, gebildet ist.

Eine hinsichtlich der magnetischen Einwirkung auf das zu behandelnde Wasser besonders vorteilhafte Ausführungsform der erfindungsgemäßen Vorrichtung ist dadurch gekennzeichnet, daß in Richtung der Achse der Kammer nacheinander zwei Magnetsysteme angeordnet sind, die mit ihren gleichnamigen Polen einander zugewandt sind.

Eine Ausführungsform der erfindungsgemäßen Vorrichtung, welche auf sehr einfache Weise das Einstellen einer bestimmten Durchflußgeschwindigkeit ermöglicht, was wie vorstehend erwähnt für die Wirkung der Behandlung des Wassers von Bedeutung ist, ist dadurch gekennzeichnet, daß eine der Kammer strömungsmäßig parallelgeschaltete Bypaßleitung, in die ein Regelventil eingefügt ist, vorgesehen ist.

Die Erfindung wird nun nachstehend unter Bezugnahme auf die Zeichnung, in der Ausführungsbeispiele erfindungsgemäßer Vorrichtungen schematisch dargestellt sind, weiter erläutert. In der Zeichnung zeigt:

Fig. 1    eine Ausführungsform einer erfindungsgemäß ausgebildeten Vorrichtung im Längsschnitt und

Fig. 2,    in schematischer Darstellung, eine Ausführungsform einer solchen Vorrichtung, bei der Durchfluß regelbar ist.

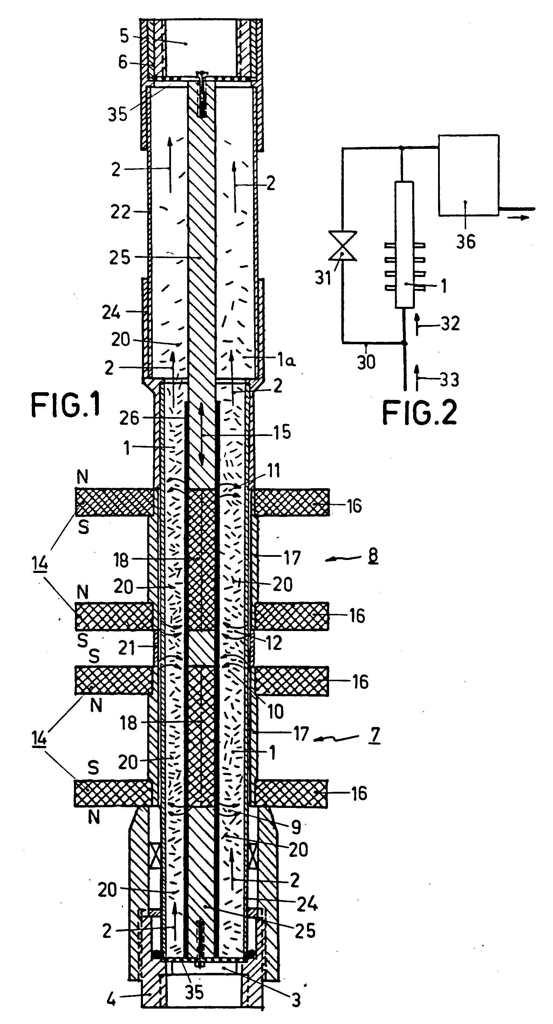

Die in Fig. 1 dargestellte Ausführungsform einer Vorrichtung zum Aufbereiten von Trink- und/oder Brauchwasser weist eine Kammer 1 auf, deren Inneres einen Durchflußweg 2 für das zu behandelnde Wasser bildet. Dieses Wasser tritt bei dem eine Zuflußöffnung 3 bildenden Anschlußstück 4 in die Kammer 1 ein und verläßt diese bei dem eine Abflußöffnung 5 bildenden Anschlußstück 6. An der Kammer 1 sind zwei Magnetsysteme 7, 8 angeordnet, welche je zwei quer zum Durchflußweg verlaufende und diesen durchsetzende Magnetfelder 9, 10 bzw. 11, 12 erzeugen.

Die Kammer 1 ist bei dieser in der Zeichnung dargestellten Ausführungsform rohrartig ausgebildet, und es haben die Magnetsysteme 7, 8 einen außerhalb der Kammer 1 angeordneten Dauermagneten 14, der in der Längs- bzw. Axialrichtung der Kammer 1, welche Richtung durch den Doppelpfeil 15 angedeutet ist, magnetisiert ist. Die Dauermagnete 14 sind im dargestellten Fall je durch zwei axial magnetisierte Magnetringe 16, welche koaxial zueinander angeordnet und mit einem zu den Ringen koaxialen Rohr 17 aus magnetisierbarem Material miteinander verbunden sind, gebildet. Diese Ausbildung der Dauermagnete 14 ist speziell auf den Einsatz von Dauermagnetmaterialien mit hoher Koerzitivkraft, wie sie z.B. in Form der bekannten Ferritmagnete zur Verfügung stehen, abgestellt, und es hat diese Ausbildung auch den Vorteil der konstruktiven Einfachheit. Es kommen aber auch andere Bauformen für den außerhalb der rohrartigen Kammer 1 angeordneten und in Längs- bzw. Axialrichtung dieser Kammer magnetisierten Dauermagneten in Frage, wie z.B. einzelne axial magnetisierte Magnetringe, welche eine größere axiale Abmessung aufweisen als die in der Zeichnung dargestellten Magnetringe und z.B. aus einer auf Basis von AlNiCo gebildeten Magnetlegierung bestehen, oder auch einzelne Magnetklötze, welche rings um die Kammer 1 angeordnet sind und gegebenenfalls mit entsprechenden Polschuhen, die den Magnetfluß in die Kammer 1 leiten, ausgestattet sind. Die Magnetsysteme 7, 8 haben weiter einen im Inneren der Kammer 1 angeordneten Kern 18 aus magnetisierbarem Material, durch den der Magnetfluß annähernd parallel zur Richtung des Durchflusses des Wassers durch die Kammer 1 verläuft; es ergibt sich so, daß der Magnetfluß des außerhalb der Kammer 1 angeordneten Dauermagneten 14 des jeweiligen Magnetsystems von der einen Seite des außen angeordneten Dauermagneten die Wasserströmung in der Kammer unter Bildung eines Magnetfeldes durchquerend den Kern 18 erreicht und dann aus diesem Kern 18 unter Bildung eines weiteren Magnetfeldes, welches dem ersterwähnten Magnetfeld entgegengesetzt orientiert ist, die Wasserströmung in der Kammer erneut durchquert und zur anderen Seite des außerhalb der Kammer angeordneten Dauermagneten 14 gelangt. Der Kern 18 kann aus einem gewöhnlichen ferromagnetischen Material, wie z.B. Weicheisen, bestehen. Vorteilhaft sieht man aber als Kern 18 einen axial magnetisierten Dauermagneten vor, da auf diese Weise eine Vergrößerung des Magnetflusses bzw. der magnetischen Feldstärke in den Magnetfeldern 9, 10 bzw. 11, 12 erzielt werden kann. Bei dieser Ausbildung des Kernes 18 als axial magnetisierter Dauermagnet ist es vorteilhaft, wenn der außerhalb der Kammer angeordnete axial magnetisierte Dauermagnet, wie dargestellt, ein an der Außenwand der Kammer 1 verlaufendes Rohr 17 aus magnetisierbarem Material, insbesondere Weicheisen, aufweist, auf das der Dauermagnetkörper, z.B. in Form von Ringen, aufgesetzt ist.

Die durch den Aufbau der Magnetsysteme 7, 8, welche längs des durch die Kammer 1 führenden Durchflußweges nacheinander angeordnet sind, erhaltene Orientierung der aufeinanderfolgenden Magnetfelder 9, 10 bzw. 11, 12 in verschiedenen, zueinander entgegengesetzten Richtungen, die durch in die Zeichnung eingetragene Pfeile angedeutet sind, ist für eine gute Wirkung der Magnetfeldbehandlung des Wassers bedeutsam und weiter auch für die spezielle Form der oligodynamischen Behandlung, auf die noch nachstehend eingehend eingegangen wird, günstig.

Die Magnetsysteme 7, 8 sind so angeordnet, daß sie mit gleichnamigen Polen, im gezeichneten Fall mit den Südpolen, einander zugewandt sind. Dadurch ist eine hohe Feldstärke der den Durchflußweg des Wassers durchquerenden Magnetfelder an den einander zugewandten Seiten der Magnetsysteme insbesondere dann erzielbar, wenn die Magnetsysteme 7, 8 nahe beieinander angeordnet sind.

Für die oligodynamischen Behandlung des Wassers sind in der Kammer 1 Körper 20 aus einem oder mehreren oligodynamisch wirkenden Metall(en) angeordnet. Es ist günstig, wenn man hiefür Körper aus Silber und Körper aus Kupfer vorsieht. Vorteilhaft setzt man Körper in Form kleiner Metallplättchen, die etwa 5 -10 mm Durchmesser haben, z.B. etwa 7 mm Durchmesser, ein. Diese aus oligodynamisch wirkenden Metallen bestehenden Körper 20 sollen sich im Betrieb der Vorrichtung im Bereich der Magnetfelder 9, 10, 11, 12 befinden. Hiezu kann man diese Körper an Fäden, Drähten oder dgl. leicht beweglich anordnen. Günstiger ist es, wenn man diese Körper bei lotrecht verlaufender Kammer 1 durch entsprechende Einstellung des Wasserdurchflusses durch diese im Bereich der Magnetfelder in Schwebe hält. Es ergeben sich dabei verhältnismäßig starke Eigenbewegungen dieser Körper und damit von den Magnetfeldern her in diesen Körpern Wirbelströme und weiter auch wechselnde kurzzeitige Berührungen der in der Strömung unter dem Einfluß der Strömung einerseits und unter dem Einfluß der Schwerkraft andererseits sich auf und ab bewegenden Körpern, wobei von diesen weg oligodynamisch wirkende Metallionen in das der Behandlung unterworfene Wasser übergehen. Das In-Schwebe-Halten der kleiner Körper aus oligodynamisch wirkendem Metall im Bereich der Magnetfelder wird auch durch die in diesen Körpern entstehenden Wirbelströme, welche von der durch die Bewegung dieser Körper im Magnetfeld in diesen Körpern induzierten elektromotorischen Kraft verursacht werden und welche ihrerseits die Bewegung dieser Körper dämpfen, begünstigt.

Das lose Anordnen der aus oligodynamisch wirkenden Metallen bestehenden Metallkörper 20 in der Kammer 1 hat auch den Vorteil, daß solche Körper im Bedarfsfall auf sehr einfache Weise nachgefüllt werden können.

Um die unter dem Einfluß der Strömung und unter dem Einfluß der Schwerkraft sowie der Magnetfelder erfolgende Bewegung der Körper 20 in der Kammer 1 gut überwachen zu können und in Verbindung damit die Strömungsgeschwindigkeit so einstellen zu können, daß die Körper 20 im Bereich der Magnetfelder in Schwebe bleiben bzw. sich im Bereich der Magnetfelder bewegen, ist ein Teil der Wand der Kammer 1 als Sichtfenster ausgebildet. Bei der in der Zeichnung dargestellten Ausführungsform ist dabei ein solches Sichtfenster 21 im Bereich der die Kammer durchsetzenden Magnetfelder zwischen den beiden Magnetsystemen 7, 8 angeordnet und ein weiteres Sichtfenster 22 in dem der Abflußöffnung 5 benachbarten Teil der Kammerwand. Es kann so einerseits ohne weiteres festgestellt werden, ob Metallkörper 20 im Bereich der Magnetfelder vorliegen und weiter ob die Strömung so stark ist, daß eine größere Anzahl der Metallkörper bereits bis in den Bereich der Abflußöffnung 5 getrieben worden ist; ist dies der Fall, wird man die Strömungsgeschwindigkeit des die Kammer 1 passierenden Wassers entsprechend herabsetzen. Liegen andererseits im Bereich der Abflußöffnung 5 keine Körper aus oligodynamisch wirkendem Metall vor, deutet dies darauf hin, daß sich eine große Anzahl derselben im Bereich der Zuflußöffnung abgelagert hat, und man wird dementsprechend die Strömungsgeschwindigkeit des Wassers in der Kammer erhöhen. Sieht man plättchenförmige Körper von etwa 7 mm Durchmesser für die oligodynamische Behandlung des Wassers vor, kann man diese durch Einstellen der Strömungsgeschwindigkeit auf einen zwischen etwa 20 und 80 cm/s liegenden Wert über die Kammer verteilt in einer schwebungsähnlichen Bewegung halten. Bei einer wie in der Zeichnung dargestellten Konfiguration der Kammer 1 mit einem zwischen der äußeren Wand 24 der Kammer 1 und der mittleren Haltestange 25 bzw. dem aus nichtmagnetischem Material, z.B. aus Kunststoff, bestehenden Halterohr 26 für die Kerne 18 der Magnetsysteme verbleibenden Kammervolumen von etwa 1,8 1 wurden dabei Körper 20, welche aus Plättchen von etwa 7 mm Durchmesser aus Silber und aus Kupfer bestanden, in einer Menge von etwa 200 g in die Kammer 1 gefüllt.

Die Kammer 1 hat in ihrem oberen Abschnitt 1a, der vor der Abflußöffnung 5 bzw. vor dem Anschlußstück 6 liegt, einen größeren Durchflußquerschnitt als im darunterliegenden Bereich, und es ergibt sich damit ein Abfall der Strömungsgeschwindigkeit im Abschnitt 1a, der den Auftrieb, den die aus oligodynamischem Metall bestehenden Körper 20 durch die Strömung erfahren, vermindert; es ist damit dem Hinaufbewegen der Körper 20 zur Abflußöffnung 5 entgegengewirkt, und es wird damit ein Verharren der Körper 20 im Bereich der Magnetfelder 9 - 12 begünstigt und zwar auch dann, wenn die für das In-Schwebe-Halten der Körper 20 erforderliche Strömungsgeschwindigkeit merklich überschritten wird; damit werden die an die Genauigkeit der Einstellung der Strömungsgeschwindigkeit gestellten Anforderungen wesentlich vermindert.

Zur Einstellung der Strömungsgeschwindigkeit kann man, wie Fig. 2 zeigt, eine der Kammer 1 strömungsmäßig parallelgeschaltete Bypaßleitung 30 vorsehen, in die ein Regelventil 31, welches von Hand aus oder auch selbsttätig betätigt werden kann, eingefügt ist. Es kann solcherart durch Verändern des durch die Kammer 1 fließenden Anteiles 32 der Gesamtströmung 33 die Strömungsgeschwindigkeit in der Kammer sehr einfach auf den jeweils gewünschten bzw. erforderlichen Wert eingestellt werden.

Um die in der Kammer 1 lose angeordneten Körper 20, die aus oligodynamisch wirkendem Metall bestehen, ungeachtet der Schwankungen der Durchflußgeschwindigkeit des Wassers sicher in der Kammer zu halten, sind an der Zuflußöffnung 3 und an der Abflußöffnung 5 Lochbleche 35, welche z.B. aus nichtrostendem Stahl bestehen können, vorgesehen. Anstelle solcher Lochbleche kann man auch Drahtsiebe oder entsprechend eng nebeneinander angeordnete Stege, zwischen denen das Wasser durchtreten kann, vorsehen.

Die durch das erfindungsgemäße Verfahren behandelten Wässer werden zweckmäßig nach der Behandlung von den dann abgetöteten Mikroorganismen durch Filtrieren befreit. Im Interesse einer möglichst guten Wirksamkeit dieser Abtrennung sieht man vorteilhaft nach dem Behandeln eine mindestens etwa 15 min, vorzugsweise aber 20 bis 30 min, dauernde Zwischenspeicherung in einem Behälter vor, wie er in Fig. 2 angedeutet und mit 36 bezeichnet ist. Nach dieser Zwischenspeicherung wird dann die Filtrierung vorgenommen, und es steht danach das behandelte Wasser zur Verwendung zur Verfügung.

**Patentansprüche**

1. Verfahren zum Aufbereiten von Trink- und/oder Brauchwasser, bei dem das Wasser durch ein oder mehrere Magnetfeld(er) hindurchgeleitet wird, dadurch gekennzeichnet, daß das Wasser in Kombination mit der Magnetfeldbehandlung auch einer oligodynamischen Behandlung unterworfen wird und hiefür Stücke oligodynamisch wirkender Metalle ohne äußere Stromzufuhr in der Wasserströmung im Bereich des Magnetfeldes oder der Magnetfelder beweglich angeordnet werden.

2. Verfahren nach Anspruch 1, dadurch gekennzeichnet, daß kleine durch ihre Abmessungen und ihre Form von der Wasserströmung bewegbare Metallstücke, welche lose in der Wasserströmung angeordnet sind, eingesetzt werden.

3. Verfahren nach Anspruch 2, dadurch gekennzeichnet, daß kleine Metallplättchen mit etwa 5 - 10 mm Durchmesser eingesetzt werden.

4. Verfahren nach Anspruch 2 oder 3, dadurch gekennzeichnet, daß das aufzubereitende Wasser in annähernd lotrechter Richtung aufwärts strömend durch ein oder mehrere Magnetfeld(er), welche im Bereich dieses lotrecht verlaufenden Strömungsabschnittes angeordnet sind, geführt wird, und daß dabei die Strömungsgeschwindigkeit des Wasser dahingehend eingestellt wird, daß die in den Magnetfeldbereich eingebrachten oligodynamisch wirkenden Metallstücke an den Stellen, an denen die Magnetfelder vorliegen, unter hin- und hergehender Bewegung annähernd in Schwebe verharren.

5. Verfahren nach einem der Ansprüche 1 bis 4, dadurch gekennzeichnet, daß Silberkörper allein oder Silberkörper zusammen mit Körpern aus einem anderen oligodynamisch wirkenden Metall, vorzugsweise Kupfer, zur oligodynamischen Behandlung eingesetzt werden.

6. Verfahren nach Anspruch 5, dadurch gekennzeichnet, daß als Silberkörper Körper aus schwach legiertem Silber, vorzugsweise mit einem Feingehalt von ca. 900, eingesetzt werden.

7. Verfahren nach einem der Ansprüche 1 bis 6, dadurch gekennzeichnet, daß das magnetisch und oligodynamisch behandelte Wasser nach der Behandlung mindestens etwa 15 min, vorzugsweise 20 bis 30 min, gespeichert, danach filtriert und dann seiner Verwendung zugeführt wird.

8. Vorrichtung zum Durchführen des Verfahrens nach einem der Ansprüche 1 bis 7, dadurch gekennzeichnet, daß die Vorrichtung eine einen Durchflußweg bildende Kammer (1) aufweist, in deren Bereich mindestens ein Magnetsystem (7, 8) angeordnet ist, welches ein quer zum Durchflußweg verlaufendes, den Durchflußweg durchsetzendes Magnetfeld (9 - 12) erzeugt, und in der Kammer (1) Körper (20) aus einem oder mehreren oligodynamisch wirkenden Metall(en) lose angeordnet sind und daß an der Zufluß- (3) und der Abflußöffnung (5) der Kammer (1) Lochbleche (35), Siebe oder dgl., welche das Passieren des Wassers erlauben, jedoch einen Durchtritt der genannten Körper (20) hindern, angebracht sind.

9. Vorrichtung nach Anspruch 8, dadurch gekennzeichnet, daß ein Teil der Kammerwand (24) als Sichtfenster (21, 22) ausgebildet ist.

10. Vorrichtung nach Anspruch 9, dadurch gekennzeichnet, daß ein oder mehrere Sichtfenster (21) im Bereich der die Kammer durchsetzenden Magnetfelder (9 - 12) angeordnet ist bzw. sind.

11. Vorrichtung nach Anspruch 9 oder 10, dadurch gekennzeichnet, daß ein Sichtfenster (22) in dem der Abflußöffnung (5) benachbarten Teil der Kammerwand (24) angeordnet ist.

12. Vorrichtung nach einem der Ansprüche 8 bis 11, dadurch gekennzeichnet, daß mehrere Magnetsysteme (7, 8) längs des durch die Kammer (1) führenden Durchflußweges (2) nacheinander angeordnet sind und daß deren Magnetfluß dahingehend orientiert ist, daß die den Durchflußweg durchsetzenden aufeinanderfolgenden Magnetfelder (9 - 12) in verschiedenen, zueinander entgegengesetzten Richtungen orientiert sind.

13. Vorrichtung nach einem der Ansprüche 8 bis 12, dadurch gekennzeichnet, daß die Kammer (1) rohrartig ausgebildet ist und daß mindestens ein Magnetsystem (7, 8) mit einem außerhalb der Kammer angeordneten und in Längs- bzw. Axialrichtung der Kammer magnetisierten Dauermagneten (14) und mit einem im Inneren der Kammer angeordneten Kern (18) aus magnetisierbarem Material vorgesehen ist, wobei der Magnetfluß des außerhalb der Kammer angeordneten Dauermagneten (14) von der einen Seite des Magneten ausgehend die Wasserströmung in der Kammer zu dem im Inneren der Kammer angeordneten Kern hin durchquert und dabei in der Kammer ein erstes Magnetfeld (9) bildet, dann im Kern (18) annähernd parallel zur Richtung des Durchflusses des Wassers durch die Kammer (1) verläuft und vom Kern (18) zurück zur anderen Seite des außerhalb der Kammer (18) angeordneten Dauermagneten (14) führt und dabei nochmals die Wasserströmung in der Kammer durchquert und in der Kammer ein zweites Magnetfeld (10) bildet, das entgegengesetzt zum erstgenannten Magnetfeld (9) orientiert ist.

14. Vorrichtung nach Anspruch 13, dadurch gekennzeichnet, daß der in der Kammer angeordnete Kern (18) des jeweiligen Magnetsystems ein axial magnetisierter Dauermagnet ist.

15. Vorrichtung nach Anspruch 13 oder 14, dadurch gekennzeichnet, daß der außerhalb der Kammer angeordnete Dauermagnet (14) durch zwei die Kammer umgebende koaxial angeordnete Ringe (16), welche axial magnetisiert sind und mit einem zu den Ringen koaxialen Rohr (17) aus magnetisierbarem Material miteinander verbunden sind, gebildet ist.

16. Vorrichtung nach einem der Ansprüche 13 bis 15, dadurch gekennzeichnet, daß in Richtung (15) der Achse der Kammer (1) nacheinander zwei Magnetsysteme (7, 8) angeordnet sind, die mit ihren gleichnamigen Polen einander zugewandt sind.

17. Vorrichtung nach einem der Ansprüche 8 bis 16, dadurch gekennzeichnet, daß eine der Kammer (1) strömungsmäßig parallelgeschaltete Bypaßleitung (30), in die ein Regelventil (31) eingefügt ist, vorgesehen ist.

18. Vorrichtung nach einem der Ansprüche 8 bis 17, dadurch gekennzeichnet, daß der Durchflußweg (2) durch die Kammer (1) von unten nach oben führt und daß der Durchflußquerschnitt der Kammer in dem zwischen den Magnetfeldern und der Abflußöffnung der Kammer gelegenen Abschnitt (1a) größer ist als im darunterliegenden Bereich der Kammer (1).

## Claims

1. Method of processing drinking water and/or water for industrial or domestic use, in which the water is passed through one or more magnetic fields, characterised in that, in combination with the magnetic field treatment, the water is also subjected to oligodynamic treatment and, for this, pieces of oligodynamically active metals are movably disposed in the water flow in the region of the magnetic field or the magnetic fields without an external current supply.

2. Method according to claim 1, characterised in that small pieces of metal are used, which are movable by the water flow due to their dimensions and shape and are disposed loosely in the water flow.

3. Method according to claim 2, characterised in that small metal plates with a diameter of approximately 5 - 10 mm are used.

4. Method according to claim 2 or 3, characterised in that the water to be treated flows upwards in an approximately vertical direction, passing through one or more magnetic fields located in the region of this vertical flow section, and in that the flow rate of the water is in this case so adjusted that the oligodynamically active pieces of metal introduced into the region of the magnetic field remain approximately suspended, whilst carrying out a reciprocating motion, in the places where the magnetic fields are present.

5. Method according to one of claims 1 to 4, characterised in that silver bodies alone or silver bodies together with bodies of another oligodynamically active metal, preferably copper, are used for the oligodynamic treatment.

6. Method according to claim 5, characterised in that, for silver bodies, bodies of weakly alloyed silver, preferably with a purity of approx. 900, are used.

7. Method according to one of claims 1 to 6, characterised in that the magnetically and oligodynamically treated water is stored after treatment for at least approximately 15 min., preferably 20 to 30 min., and is then filtered and supplied for use.

8. Apparatus for carrying out the method according to one of claims 1 to 7, characterised in that the apparatus has a chamber (1) forming a flow passage, near which at least one magnet system (7, 8) is located, which generates a magnetic field (9 - 12) extending transversely to the flow passage and penetrating the flow passage, and bodies (20) composed of one or more oligodynamically active metals are loosely disposed in the chamber (1), and in that perforated plates (35), sieves or the like, which permit passage of the water but prevent said bodies (20) from passing through, are mounted on the inlet (3) and outlet (5) aperture of the chamber (1).

9. Apparatus according to claim 8, characterised in that part of the chamber wall (24) is formed as an inspection window (21, 22).

10. Apparatus according to claim 9, characterised in that one or more inspection windows (21) is or are disposed in the region of the magnetic fields (9 - 12) penetrating the chamber.

11. Apparatus according to claim 9 or 10, characterised in that an inspection window (22) is disposed in the part of the chamber wall (24) adjacent to the outlet aperture (5).

12. Apparatus according to one of claims 8 to 11, characterised in that a plurality of magnet systems (7, 8) are arranged in series along the flow passage (2) leading through the chamber (1), and in that their magnetic flux is so oriented that the consecutive magnetic fields (9 - 12) penetrating the flow passage are oriented in different, mutually opposite directions.

13. Apparatus according to one of claims 8 to 12, characterised in that the chamber (1) is tubular, and in that at least one magnet system (7, 8) is provided with a permanent magnet (14) located outside the chamber and magnetised in the longitudinal and axial direction of the chamber and with a core (18) composed of magnetisable material and located inside the chamber, in which case the magnetic flux of the permanent magnet (14) located outside the chamber passes through the water flow in the chamber, from one side of the magnet to the core located inside the chamber, and thus forms a first magnetic field (9) in the chamber, then runs through the core (18) approximately parallel to the direction of flow of the water through the chamber (1) and back from the core (18) to the other side of the permanent magnet (14) located outside the chamber (18), and thus passes through the water flow in the chamber once more and forms a second magnetic field (10) in the chamber, which is oriented in the opposite direction to the first magnetic field (9).

14. Apparatus according to claim 13, characterised in that the core (18) of the respective magnet system located in the chamber is an axially magnetised permanent magnet.

15. Apparatus according to claim 13 or 14, characterised in that the permanent magnet (14) located outside the chamber is formed by two coaxially arranged rings (16) surrounding the chamber, which are axially magnetised and are connected together with a pipe (17) composed of magnetisable material and arranged coaxially to the rings.

16. Apparatus according to one of claims 13 to 15, characterised in that two magnet systems (7, 8) are arranged in series in the direction (15) of the axis of the chamber (1) with their like poles facing one another.

17. Apparatus according to one of claims 8 to 16, characterised in that a bypass pipe (30) is provided, which is connected in parallel to the chamber (1) in the direction of flow and into which a control valve (31) is inserted.

18. Apparatus according to one of claims 8 to 17, characterised in that the flow passage (2) through the chamber (1) leads from the bottom upwards, and in that the flow cross-section of the chamber in the section (1a) between the magnetic fields and the outlet aperture of the chamber is larger than in the region of the chamber (1) below.

**Revendications**

1. Procédé de traitement d'eau potable et/ou d'eau industrielle, suivant lequel l'eau est dirigée à travers un ou plusieurs champ(s) magnétique(s), caractérisé en ce que l'eau est aussi soumise, en combinaison avec le traitement par un champ magnétique, à un traitement oligodynamique pour lequel des morceaux de métaux ayant une action oligodynamique sont disposés mobiles, sans apport extérieur de courant, dans la circulation d'eau à l'intérieur de la région du champ magnétique ou des champs magnétiques.

2. Procédé selon la revendication 1, caractérisé en ce qu'on utilise de petits morceaux de métal rendus mobiles par la circulation d'eau par le fait de leurs cotes et de leur forme, qui sont disposés librement dans la circulation d'eau.

3. Procédé selon la revendication 2, caractérisé en ce que des petites plaquettes de métal d'un diamètre d'environ 5-10 mm sont utilisées.

4. Procédé salon la revendication 2 ou 3, caractérisé en ce que l'eau à traiter est dirigée en une circulation ascendante en direction sensiblement verticale à travers un ou plusieurs champ(s) magnétique(s) qui sont placés dans la région de cette partie de la circulation qui est verticale et de plus en ce que la vitesse de circulation de l'eau est réglée de manière que les morceaux de métal ayant une action oligodynamique et introduite dans la région du champ magnétique restent approximativement en suspension en exécutant un mouvement alternatif aux emplacements auxquels les champs magnétiques sont présents.

5. Procédé selon l'une des revendications 1 à 4, caractérisé en ce que des corps d'argent uniquement ou des corps d'argent ainsi que des corps d'un autre métal ayant une action oligodynamique, de préférence de cuivre, sont utilisés pour le traitement oligodynamique.

6. Procédé selon la revendication 5, caractérisé en ce que les corps d'argent utilisés sont des corps d'argent faiblement alliés, ayant de préférence un titre d'environ 900.

7. Procédé selon l'une des revendications 1 à 6, caractérisé en se que l'eau ayant subi un traitement magnétique et oligodynamique est emmaganisée après le traitement pendant au moins environ 15 min, de préférence pendant 20 à 30 min, puis elle est filtrée et envoyée ensuite à son utilisation.

8. Dispositif pour la mise en oeuvre du procédé selon l'une des revendications 1 à 7, caractérisé en ce que le dispositif comprend une chambre (1) formant une voie de circulation dans la région de laquelle au moins un système magnétique (7, 8) est disposé et produit un champ magnétique (9 - 12) orienté perpendiculairement à la voie de circulation et traversant la voie de circulation et des corps (20) d'un ou de plusieurs métaux ayant une action oligodynamique sont placés librement dans la chambre (1), et en ce que des tôles perforées (35), des tamis ou analogues, qui laissent passer l'eau mais empêchent le passage desdits corps (20), sont placés à l'orifice d'admission (3) et à l'orifice d'évacuation (5) de la chambre (1).

9. Dispositif selon la revendication 8, caractérisé en ce qu'une partie de la paroi (24) de la chambre est conformée en voyant (21, 22).

10. Dispositif selon la revendication 9, caractérisé en ce qu'un ou plusieurs voyant(s) (21) est ou sont disposé(s) dans la région des champs magnétiques (9 - 12) qui traversent la chambre.

11. Dispositif selon la revendication 9 ou 10, caractérisé en ce qu'un voyant (22) est disposé dans la partie de la paroi (24) de la chambre qui est voisine de l'orifice d'évacuation (5).

12. Dispositif selon l'une des revendications 8 à 11, caractérisé en ce que plusieurs systèmes magnétiques (7, 8) sont disposés à la suite les une des autres le long de la voie de circulation (2) qui passe par la chambre (1) et en ce que leur flux magnétique est orienté de manière que les champs magnétiques successifs (9 - 12) qui traversent la voie de circulation soient orientés dans différentes directions opposées les unes aux autres.

13. Dispositif selon l'une des revendications 8 à 12, caractérisé en ce que la chambre (1) a une forme tubulaire et en ce qu'au moins un système magnétique (7, 8) est prévu avec un aimant permanent (14) disposé à l'extérieur de la chambre et aimanté en direction longitudinale ou axiale de la chambre et avec un noyau (18) de matière aimantable qui est disposé à l'intérieur de la chambre, le flux magnétique de l'aimant permanent (14) disposé à l'extérieur de la chambre traversant la circulation d'eau dans la chambre en partant d'un côté de l'aimant pour se diriger vers le noyau disposé à l'intérieur de la chambre en formant ainsi dans la chambre un premier champ magnétique (9), puis étant orienté dans le noyau (18) à peu près parallèlement à la direction de la circulation de l'eau dans la chambre (1) et revenant du noyau (18) vers l'autre côté de l'aimant permanent (14) disposé à l'extérieur de la chambre (18) on traversant ainsi encore une fois la circulation d'eau dans la chambre et en formant dans la chambre un second champ magnétique (10) qui est orienté en sens opposé à celui du premier champ magnétique mentionné (9).

14. Dispositif selon la revendication 13, caractérisé en ce que le noyau (18) disposé dans la chambre et faisant partie de chaque système magnétique est un aimant permanent à aimantation axiale.

15. Dispositif selon la revendication 13 ou 14, caractérisé en ce que l'aimant permanent (14) disposé à l'extérieur de la chambre est formé de deux anneaux coaxiaux (16) entourant la chambre, aimantés axialement et reliés par un tube (17) de matière aimantable qui est coaxial aux anneaux.

16. Dispositif selon l'une des revendications 13 à 15, caractérisé en ce que deux systèmes magnétiques (7, 8), dont les pôles de même signe sont tournés l'un vers l'autre, sont disposés à la suite l'un de l'autre dans la direction (15) de l'axe de la chambre (1).

17. Dispositif selon l'une des revendications 8 à 16, caractérisé en ce qu'un conduit de dérivation (30), dans lequel une soupape de réglage (31) est montée, est branché en parallèle avec la circulation passant dans la chambre (1).

18. Dispositif selon l'une des revendications 8 à 17, caractérisé en ce que la voie (2) de circulation dans la chambre (1) va de bas en haut et en ce que la section de passage de la partie (1a) de la chambre qui est située entre les champs magnétiques et l'orifice d'évacuation de la chambre est plus grande que celle de la partie de la chambre (1) située sous la précédente.

FIG.1

FIG.2